(19) Europäisches Patentamt
European Patent Office
Office européen des brevets

(11) Veröffentlichungsnummer: **0 111 830**
**B1**

(12) # EUROPÄISCHE PATENTSCHRIFT

(45) Veröffentlichungstag der Patentschrift: **01.04.87**

(51) Int. Cl.⁴: **C 09 B 62/085,** C 09 B 62/51, D 06 P 3/10, D 06 P 3/66

(21) Anmeldenummer: **83112280.9**

(22) Anmeldetag: **07.12.83**

(54) **Wasserlösliche Monoazoverbindungen, Verfahren zu ihrer Herstellung und ihre Verwendung als Farbstoffe.**

(30) Priorität: **10.12.82 DE 3245734**

(43) Veröffentlichungstag der Anmeldung: **27.06.84 Patentblatt 84/26**

(45) Bekanntmachung des Hinweises auf die Patenterteilung: **01.04.87 Patentblatt 87/14**

(84) Benannte Vertragsstaaten: **BE CH DE FR GB IT LI**

(56) Entgegenhaltungen:
**EP - A - 0 032 187**
**EP - A - 0 040 806**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Bredereck, Hans-Joachim, Dr., Fürstenbergerstrasse 23, D-6000 Frankfurt am Main 1 (DE)**

**EP 0 111 830 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Azofarbstoffe.

Aus dem Beispiel 1 der deutschen Patentschrift 1 265 698 ist ein faserreaktiver Monoazofarbstoff bekannt, der die 6-Amino-1-naphthol-3-sulfonsäure als Kupplungskomponente enthält, an die über die Aminogruppe ein (β-Sulfatoäthylsulfonyl-phenylamino)-chlortriazinyl-Rest gebunden steht, und dessen Diazokomponente der 2-Sulfophenyl-Rest ist. Desweiteren werden in der europäischen Patentanmeldungs-Veröffentlichung Nr. 0 032 187 A2 faserreaktive Monoazofarbstoffe beschrieben, deren Diazokomponente beispielsweise ein 4-(β-Sulfatoäthylsulfonyl)-phenyl-Rest ist und deren 3,6-Disulfo- bzw. 3,5-Disulfo-8-amino-1-naphthol-Kupplungskomponente an deren Aminogruppe einen 2-Amino-4-chlor-1,3,5-triazin-6-yl-Rest gebunden enthält, wobei die am Triazinrest befindliche Aminogruppe durch Alkyl und Phenyl mono- oder disubstituiert ist.

Hingegen beschreibt die europäische Patentanmeldungs-Veröffentlichung Nr. 0 040 806 A2 Farbstoffe, die als faserreaktive Gruppen, an verschiedene Stellen des Farbstoffrestes gebunden, einen Fluortriazinylamino-Rest mit einem Aminosubstituenten und einem Rest der Vinylsulfonyl-Reihe besitzen. So sind aus den Beispielen 61 und 66 Monoazofarbstoffe bekannt, deren Diazokomponente ein 2,5-Dimethoxy-4-(β-thiosulfatoäthylsulfonyl)-phenyl- bzw. 1-Sulfo-6-(β-sulfatoäthylsulfonyl)-naphth-2-yl-Rest ist und deren 3-Sulfo-1-naphthol-Kupplungskomponente in 7- bzw. 6-Stellung über eine Aminogruppe einen Sulfophenylaminofluortriazin-Rest gebunden enthalten.

Es wurden nunmehr neue, wertvolle und vorteilhafte wasserlösliche Monoazoverbindungen gefunden, die der allgemeinen Formel (1)

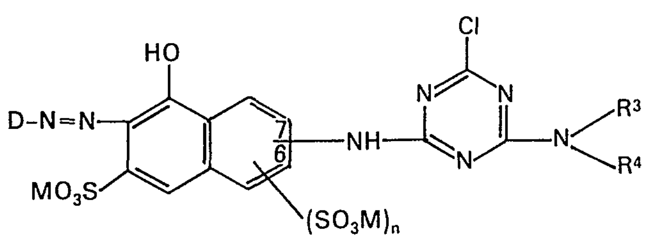

(1)

entsprechen. In dieser bedeuten:

D ist ein Phenyl- oder Naphthylrest der allgemeinen Formel (2a), (2b) oder (2c)

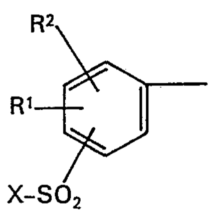

(2a)

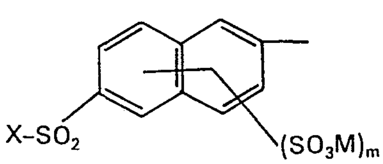

(2b)

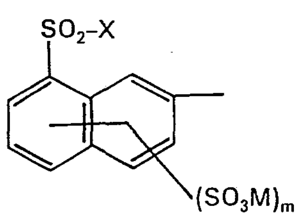

(2c)

in welchen

$R^1$ ein Wasserstoffatom, eine Alkylgruppe von 1 bis 4 C-Atomen, wie die Äthylgruppe und insbesondere die Methylgruppe, eine Alkoxygruppe von 1 bis 4 C-Atomen, wie die Äthoxygruppe und insbesondere die Methoxygruppe, eine Carboxygruppe (entsprechend der allgemeinen Formel -COOM mit M der nachstehend angegebenen Bedeutung) oder eine Sulfogruppe (entsprechend der allgemeinen Formel $-SO_3M$ mit M der nachstehend angegebenen Bedeutung) ist und

$R^2$ ein Wasserstoffatom, eine Alkylgruppe von 1 bis 4 C-Atomen, wie die Äthylgruppe und insbesondere die Methylgruppe, eine Alkoxygruppe von 1 bis 4 C-Atomen, wie die Äthoxygruppe und insbesondere die Methoxygruppe, eine Carboxygruppe oder eine Sulfogruppe bedeutet,

wobei $R^1$ und $R^2$ zueinander gleiche oder voneinander verschiedene Bedeutungen haben können,

m für die Zahl Null, 1 oder 2 steht (wobei m = 0 Wasserstoff bedeutet) und

X die Vinylgruppe oder eine β-Thiosulfatoäthyl-Gruppe (entsprechend der allgemeinen Formel $-CH_2-CH_2-S-SO_3M$ mit M der nachstehend angegebenen Bedeutung), die β-Chloräthyl-Gruppe oder bevorzugt die β-Sulfatoäthyl-Gruppe (entsprechend der allgemeinen Formel $-CH_2-CH_2-OSO_3M$ mit M der nachstehend angegebenen Bedeutung) ist, wobei

die Gruppe $-SO_2-X$ in dem Bezolkern von Formel (2a) bevorzugt in meta- oder insbesondere in para-Stellung zur freien Bindung steht;

n steht für die Zahl Null oder 1 (wobei n = 0 Wasserstoff bedeutet);

die Aminogruppe, über die der Chlortriazinylrest an den Sulfonaphtholrest gebunden ist, befindet sich in 6- oder 7-Stellung dieses Naphtholrestes;

die freistehende Sulfogruppe $-SO_3M$ mit M der nachstehend angegebenen Bedeutung im Naphtholrest steht in 5-, 6- oder 7-Stellung, bevorzugt

in 6- oder 7-Stellung, des Naphtholrestes gebunden;

$R^3$ ist ein Wasserstoffatom oder eine Alkylgruppe von 1 bis 4 C-Atomen, wie eine Methyl- oder Äthylgruppe, die durch eine Hydroxygruppe oder durch eine oder zwei, vorzugsweise eine, wasserlöslich machende Gruppen substituiert sein kann;

$R^4$ ist ein Wasserstoffatom oder eine Alkylgruppe von 1 bis 6 C-Atomen, vorzugsweise von 1 bis 4 C-Atomen, wie insbesondere die Methyl- oder Äthylgruppe, die durch eine Hydroxygruppe oder durch eine oder zwei, vorzugsweise eine, wasserlöslich machende Gruppen substituiert sein kann, oder ist der Phenyl- oder ein Naphthylrest, wobei diese Phenyl- und Naphthylreste noch durch einen, zwei oder drei, vorzugsweise einen oder zwei, Substituenten aus der Gruppe Sulfo, Carboxy, Halogen, wie Chlor und Brom, Alkyl von 1 bis 4 C-Atomen, Alkoxy von 1 bis 4 C-Atomen, Hydroxy und Carbalkoxy von 2 bis 5 C-Atomen substituiert sein können, oder ist ein Cycloalkylrest, wie Cyclohexylrest, und

$R^3$ und $R^4$ können zueinander gleiche oder voneinander verschiedene Bedeutungen besitzen;

M ist ein Wasserstoffatom oder ein Alkalimetall oder das Äquivalent eines Metalls der 2. oder 3. Hauptgruppe des Periodischen Systems, vorzugsweise des Calciums.

Die für $R^3$ und $R^4$ erwähnten wasserlöslich machenden Gruppen sind beispielsweise Phosphatogruppen (entsprechend der allgemeinen Formel $-OPO_3M_2$ mit M der obengenannten Bedeutung), Sulfatogruppen (entsprechend der allgemeinen Formel $-OSO_3M$ mit M der obengenannten Bedeutung) und bevorzugt Sulfogruppen (entsprechend der allgemeinen Formel $-SO_3M$ mit M der obengenannten Bedeutung) und Carboxygruppen (entsprechend der allgemeinen Formel $-COOM$ mit M der obengenannten Bedeutung).

Der Formelrest $R^4$ ist beispielsweise ein 1-Sulfo-2-naphthyl-, ein 1,5-Disulfo-2-naphthyl-, 1,7-Disulfo-2-naphthyl-, 3,6-Disulfo-2-naphthyl-, 4,8-Disulfo-2-naphthyl-, 2,3-Disulfo-phenyl-, 4-Sulfo-phenyl-, 2,4-Disulfo-phenyl-, 2,5-Disulfophenyl-, 2-Methoxy-5-sulfo-phenyl-, 4-Methoxy-2-sulfo-phenyl-, 4-Methyl-2-sulfo-phenyl-, 4,6-Dimethyl-2-sulfo-phenyl-, 4-Chlor-2-sulfo-phenyl-, 4,5-Dichlor-2-sulfo-phenyl-, 2,5-Dichlor-4-sulfo-phenyl-, 4-Chlor-5-methyl-2-sulfo-phenyl-, 4-Methyl-5-chlor-2-sulfo-phenyl-, 4-Methoxy-2-sulfo-phenyl-, 2-Carboxy-4-sulfo-phenyl-, 2-Carboxy-phenyl- oder ein 4-Carboxy-phenyl-Rest.

Die erfindungsgemässen Azoverbindungen können in Form ihrer freien Säure und bevorzugt in Form ihrer Salze, insbesondere neutralen Salze, vorliegen; als Salze sind insbesondere die Alkalimetall- und Erdalkalimetallsalze zu nennen, so beispielsweise die Natrium-, Kalium- und Calciumsalze. Die neuen Verbindungen finden bevorzugt in Form dieser Salze ihre Verwendung zum Färben oder Bedrucken von hydroxy- und/oder carbonamidgruppenhaltigem Material, vorzugsweise Fasermaterial.

Die vorliegende Erfindung betrifft weiterhin Verfahren zur Herstellung dieser erfindungsgemässen Azoverbindungen der allgemeinen Formel (1). Sie sind dadurch gekennzeichnet, dass man die Diazoniumverbindung eines Anilins oder 2-Naphthylamins der allgemeinen Formel (3a), (3b) oder (3c)

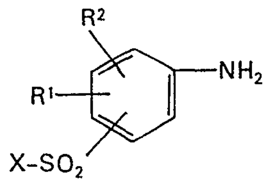

(3a)

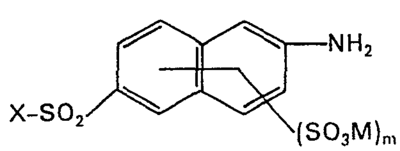

(3b)

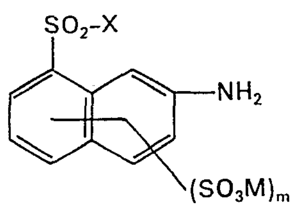

(3c)

in welchen M, X, $R^1$, $R^2$ und n die genannten Bedeutungen haben, mit einer Kupplungskomponente der allgemeinen Formel (4)

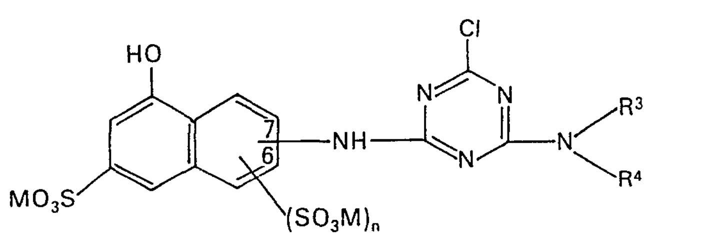

(4)

in welcher M, n, $R^3$ und $R^4$ die obengenannten Bedeutungen haben und in welcher die freistehende Sulfogruppe in 5-, 6- oder 7-Stellung sowie die Aminogruppe, die mit dem Chlortriazinylrest verbunden ist, in 6- oder 7-Stellung an den Naphthalinkern gebunden sind, kuppelt, oder dass man eine Azoverbindung der allgemeinen Formel (5)

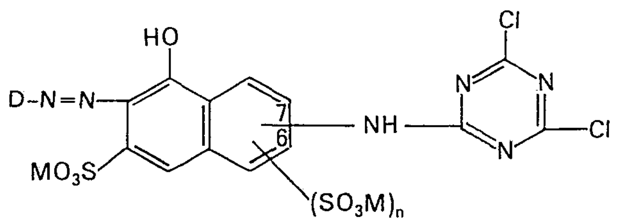

(5)

in welcher D, M und n die obengenannten Bedeutungen haben und in welcher die freistehende Sulfogruppe in 5-, 6- oder 7-Stellung sowie die Aminogruppe, die mit dem Dichlortriazinylrest verbunden ist, in 6- oder 7-Stellung an den Naphthalinkern gebunden sind, mit einem Amin der allgemeinen Formel (6)

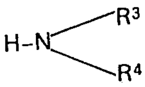

(6)

in welcher $R^3$ und $R^4$ die obengenannten Bedeutungen haben, umsetzt.

Die Diazotierung der Aniline und Naphthylamine der allgemeinen Formeln (3) wird analog bekannten und an und für sich üblichen Verfahrensweisen durchgeführt, so vorzugsweise in wässrigem, saurem Medium mittels salpetriger Säure bei einer Temperatur zwischen -5°C und +15°C und bevorzugt bei einem pH-Wert zwischen 0,5 und 2.

Ebenso kann die nachfolgende Kupplungsreaktion mit der Verbindung der allgemeinen Formel (4) analog bekannten Methoden der Kupplung von diazotierten Anilinverbindungen oder Naphthylaminverbindungen mit Acylamino-naphtholsulfonsäuren erfolgen, wobei zur Vermeidung der Schädigung der faserreaktiven Gruppe alkalische Bedingungen vermieden werden sollen. Bevorzugt erfolgt die Kupplungsreaktion in einem pH-Bereich zwischen 4 und 7 und bei einer Temperatur zwischen -5°C und +30°C in wässrigem Medium.

Die Umsetzung der Azoverbindung der allgemeinen Formel (5) mit einer Aminoverbindung der allgemeinen Formel (6) kann ebenso analog bekannten und an und für sich üblichen Verfahrensweisen der Umsetzung von Aminoverbindungen mit einer Dichlortriazinylamino-naphthol-Verbindung durchgeführt werden, so beispielsweise in wässrigem Medium bei einer Temperatur zwischen 5 und 70°C, vorzugsweise zwischen 20 und 40°C, und bei einem pH-Wert zwischen 3 und 7,5, vorzugsweise zwischen 4 und 7.

Die Herstellung der Ausgangsverbindungen der allgemeinen Formel (4) und der allgemeinen Formel (5) erfolgt ebenfalls analog bekannten Verfahrensweisen, wie beispielsweise in der deutschen Offenlegungsschrift Nr. 2 949 034 beschrieben.

Die Abscheidung und Isolierung der erfindungsgemäss hergestellten Monoazoverbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz, wie beispielsweise ein Gemisch aus Mono- und Dinatriumphosphat, zugefügt werden kann. Gegebenenfalls können diese Syntheselösungen auch, gegebenenfalls nach Zusatz einer Puffersubstanz und nach eventuellem Konzentrieren, direkt als Flüssigpräparation der färberischen Verwendung zugeführt werden.

Die erfindungsgemässen Monoazoverbindungen besitzen wertvolle Farbstoffeigenschaften und weisen infolge des Restes des Vinylsulfontyps und des Chlortriazinylrestes faserreaktive Eigenschaften auf. Sie werden zum Färben von hydroxy- und/oder carbonamidgruppenhaltigen Materialien, beispielsweise in Form von Flächengebilden, wie Papier und Leder, oder von Folien, wie aus Polyamid, oder in der Masse, wie beispielsweise von Polyamid und Polyurethan, insbesondere aber von diesen Materialien in Faserform, verwendet.

Gegenstand der vorliegenden Erfindung ist deshalb auch die Verwendung der erfindungsgemässen Azoverbindungen der allgemeinen Formel (1) zum Färben dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken.

Hydroxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische Polyamide, wie Polyamid-6,6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemässen Azoverbindungen lassen sich auf den genannten Substraten, insbesondere auf den genannten Fasermaterialien,

nach den für wasserlösliche Farbstoffe, insbesondere für faserreaktive Farbstoffe, bekannten Anwendungstechniken applizieren und fixieren.

So erhält man mit ihnen auf hydroxygruppenhaltigen Materialien, wie Cellulosefasern, insbesondere nach dem Ausziehverfahren unter Verwendung von verschiedensten säurebindenden Mitteln und gegebenenfalls unter Zugabe von neutralen Salzen, wie Natriumchlorid oder Natriumsulfat, bereits bei Färbetemperaturen zwischen 60 und 80°C sehr gute Farbausbeuten. Im allgemeinen färbt man bei einer Temperatur zwischen 60 und 98°C, gegebenenfalls in Gegenwart von üblichen Färbereihilfsmitteln im wässrigen Bad. Die Färbungen können aber auch bei höherer Temperatur, wie bei Siedetemperatur des Färbebades oder in geschlossenen Färbeapparaturen bei Temperaturen bis zu 115°C, ausgeführt werden. Ebenso werden nach üblichen Klotzverfahren und üblichen Druckverfahren auf Cellulosefasermaterialien farbstarke Färbungen und Drucke erhalten.

Die mit den erfindungsgemässen Azoverbindungen erhältlichen Färbungen und Drucke zeichnen sich durch gute Echtheitseigenschaften aus, so beispielsweise durch eine gute Lichtechtheit und durch gute Nassechtheiten, wie insbesondere gute Wasch-, Walk-, Wasser-, Meerwasser-, Überfärbe- und saure und alkalische Schweissechtheiten, und ebenso durch gute Bügel- und Reibechtheiten.

Des weiteren können die erfindungsgemässen Farbstoffe der Formel (1) zum Färben von Wolle Verwendung finden. Auch lässt sich filzfrei oder filzarm ausgerüstete Wolle (vergl. bspw. H. Rath, Lehrbuch der Textilchemie, Springer-Verlag, 3. Auflage (1972), S. 295–299), insbesondere nach Ausrüstung nach dem sogenannten Hercosett-Verfahren (J. Soc. Dyers and Colourists, 1972, 93–99, und 1975, 33–44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad, insbesondere bei einem pH-Wert zwischen 3,5 und 5,5, unter Kontrolle des pH-Wertes dem Ausziehprozess unterworfen wird und gegen Ende der Färbezeit der pH-Wert in den neutralen und gegebenenfalls schwach alkalischen Bereich bis zu einem pH von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemässen Verbindungen der allgemeinen Formel (1) ist sehr hoch. Sie liefern auf den Fasermaterialien, insbesondere beim reaktiven Färben von Wolle, sehr klare, gelbstichig bis blaustichig rote Färbungen. Bei Anwendungen von Färbetemperaturen von 100 bis 106°C ist eine hohe Baderschöpfung festzustellen.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Die in den Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Beispiel 1

239 Teile 7-Amino-1-naphthol-3-sulfonsäure werden unter Rühren in eine Suspension aus 193,6 Teilen Cyanurchlorid in 1300 Teilen Wasser und 400 Teilen Eis eingetragen. Man rührt 4 Stunden bei einer Temperatur zwischen 12 und 15°C und bei einem pH-Wert zwischen 2 und 2,5 nach; dieser pH-Bereich wird durch langsame Zugabe von etwa 2600 Volumenteilen einer 9%igen Natriumbicarbonatlösung gehalten. Danach wird das Reaktionsgemisch mit 50 Teilen Kieselgur versetzt und geklärt.

Zu der Lösung dieses primären Kondensationsproduktes wird eine neutrale Lösung von 173 Teilen Anilin-3-sulfonsäure in 1000 Teilen Wasser gegeben. Man rührt diesen Ansatz bei einem pH-Wert zwischen 5 und 5,5 zunächst eine Stunde bei 30 bis 35°C, sodann noch 30 Minuten bei 50 bis 55°C weiter. Anschliessend wird zu dieser Lösung des sekundären Kondensationsproduktes die wässrige Lösung des Diazoniumsalzes aus 281 Teilen 4-β-Sulfatoäthylsulfonyl-anilin gegeben. Hierfür diazotiert man die angegebene Menge des 4-β-Sulfatoäthylsulfonyl-anilins in etwa 1800 Teilen wässriger salzsaurer Lösung auf übliche Weise mittels Natriumnitrit; überschüssige salpetrige Säure wird wie üblich nach beendeter Diazotierung mittels Amidosulfonsäure zerstört.

Nach Vereinigung dieser Diazoniumsalzlösung mit der Lösung des sekundären Kondensationsproduktes wird die Kupplung bei einer Temperatur von etwa 15°C unter Einhaltung eines pH-Wertes von 6,5 bis 7,0 unter zweistündigem Rühren durchgeführt; danach erwärmt man das Kupplungsgemisch auf 50°C, gibt 30 Teile Kieselgur hinzu, filtriert die Lösung, löst in dem Filtrat

14 Teile Dinatriumphosphat und unterwirft das Filtrat sodann einer Sprühtrocknung.

Es wird ein rotes, elektrolythaltiges (vorwiegend Natriumchlorid haltiges) Pulver des Natriumsalzes der Verbindung der Formel

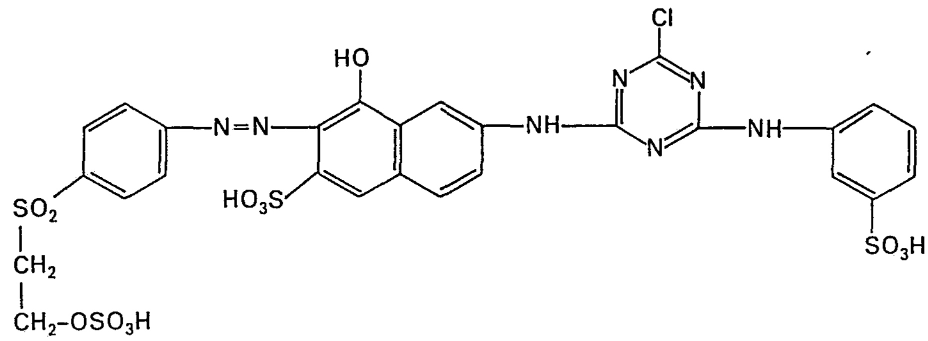

erhalten. Diese erfindungsgemässe Azoverbindung zeigt sehr gute faserreaktive Farbstoffeigenschaften und färbt die in der Beschreibung genannten Materialien, insbesondere Cellulosefasermaterialien nach den für faserreaktive Farbstoffe üblichen Applikations- und Fixiermethoden, in farbstarken, roten Nuancen von ausgezeichneten Echtheiten, von denen insbesondere die gute Lichtechtheit sowie die guten Nassechtheiten, wie insbesondere Wasch-, Wasser-, Meerwasser- und Schweissechtheiten, hervorgehoben werden können.

Die erfindungsgemässe Azoverbindung zeichnet sich weiterhin durch einen hohen Fixiergrad aus.

Beispiel 2

Man diazotiert in üblicher Weise in wässriger Lösung 41,1 Teile 6-(β-Sulfatoäthylsulfonyl)-2-amino-naphthalin-1-sulfonsäure und gibt sodann nach Einstellen und unter Einhaltung eines pH-Wertes zwischen 6,0 und 6,5 die Lösung des sekundären Kondensationsproduktes aus je einem Mol Cyanurchlorid, 6-Amino-1-naphthol-3-sulfonsäure und 4-Amino-benzoesäure unter Rühren langsam hinzu.

Die hier verwendete Lösung des sekundären Kondensationsproduktes wird wie folgt hergestellt: Man trägt 23,9 Teile 6-Amino-1-naphthol-3-sulfonsäure in eine Suspension von 19,4 Teilen Cyanurchlorid in 100 Teilen Wasser und 70 Teilen Eis unter gutem Rühren ein, rührt noch 3 Stunden bei einer Temperatur zwischen 5 und 10°C unter Einhaltung eines pH-Wertes von 2,5 bis 3,0 nach. Die primäre Kondensationsreaktion ist beendet, sobald kein Amin mehr nachweisbar ist. Zu dieser Lösung des primären Kondensationsproduktes gibt man anschliessend die Lösung von 13,7 Teilen 4-Amino-benzoesäure in 100 Teilen Wasser und rührt das Reaktionsgemisch bei einem pH-Wert zwischen 5,0 und 5,5 zunächst eine Stunde bei 30 bis 35°C, sodann noch 30 Minuten bei 50 bis 55°C weiter.

Nachdem, wie oben erwähnt, die Diazoniumsalzsuspension und die Lösung des sekundären Kondensationsproduktes als Kupplungskomponente zusammengegeben wurden, lässt man noch 2 Stunden bei 15°C unter Einhaltung eines pH-Wertes zwischen 6,5 und 7,0 nachrühren. Anschliessend wird der Ansatz geklärt und das Filtrat sprühgetrocknet.

Man erhält ein rotes, elektrolythaltiges (vorwiegend Natriumchlorid haltiges) Pulver des Natriumsalzes der Verbindung der Formel

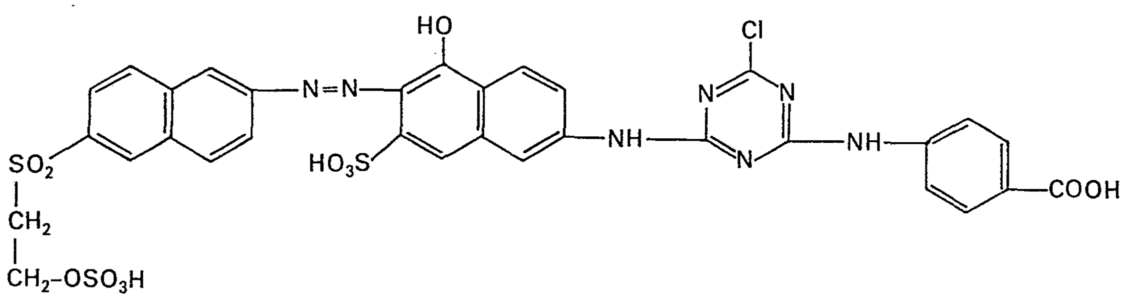

Diese erfindungsgemässe Azoverbindung besitzt sehr gute faserreaktive Farbstoffeigenschaften und färbt beispielsweise Wolle, Cellulosefasermaterialien und ebenfalls Polyamidfasermaterialien nach den in der Technik üblichen Färbe- und Fixiermethoden für Farbstoffe mit faserreaktiven Gruppen in roten, farbstarken Tönen mit sehr guten Nassechtheiten, wie beispielsweise sehr guten Waschechtheiten sowie guten Wasser-, Meerwasser- und Schweissechtheiten, und mit sehr guten Reibechtheiten.

Beispiele 3 bis 53

In den nachfolgenden Tabellenbeispielen sind weitere erfindungsgemässe Monoazoverbindungen mit Hilfe der Komponenten der allgemeinen

Formel (1) beschrieben. Sie lassen sich in erfindungsgemässer Weise, beispielsweise analog einem der obigen Ausführungsbeispiele, aus ihren Komponenten (einer Aminoverbindung der allgemeinen Formel D-$NH_2$ entsprechend den Anilin- oder Aminonaphthalin-Verbindungen der allgemeinen Formeln (3) als Diazokomponente, einer Amino-3-sulfo-8-naphthol-Verbindung, dem Cyanurchlorid und einer Aminoverbindung entsprechend der allgemeinen Formel (6)) herstellen.

Diese erfindungsgemässen Azoverbindungen besitzen ebenfalls sehr gute faserreaktive Farbstoffeigenschaften mit sehr guten anwendungstechnischen Eigenschaften und liefern Färbungen und Drucke auf den in der Beschreibung genannten Fasermaterialien, insbesondere auf Wolle und auf Cellulosefasermaterialien, nach den für faserreaktive Farbstoffe üblichen Applikations- und Fixiermethoden mit hohen Farbstärken und guten Echtheiten in der in dem jeweiligen Tabellenbeispiel angegebenen Nuance auf beispielsweise Baumwolle.

Monoazoverbindung der allgemeinen Formel (1a)

| Bsp. | Formelrest d | 3-Sulfo-...-amino-1-naphthol-Rest | Formelrest $R^3$ | Formelrest $R^4$ | Nuance auf Baumwolle |
|---|---|---|---|---|---|
| 3 | 3-(β-Sulfatoäthyl-sulfonyl)-phenyl | 7-Amino-1-naphthol-3-sulfonsäure | Wasserstoff | 4-Sulfo-phenyl | rot |
| 4 | 3-(β-Sulfatoäthyl-sulfonyl)-phenyl | 7-Amino-1-naphthol-3-sulfonsäure | Wasserstoff | 4-Carboxy-phenyl | rot |
| 5 | 4-(β-Sulfatoäthyl-sulfonyl)-phenyl | 7-Amino-1-naphthol-3-sulfonsäure | Wasserstoff | Cyclohexyl | rot |
| 6 | 4-(β-Sulfatoäthyl-sulfonyl)-phenyl | 7-Amino-1-naphthol-3-sulfonsäure | Wasserstoff | 2-Methoxy-5-sulfo-phenyl | rot |
| 7 | 6-(β-Sulfatoäthyl-sulfonyl)-2-naphthyl | 7-Amino-1-naphthol-3-sulfonsäure | Wasserstoff | 3-Sulfo-phenyl | rot |
| 8 | 8-(β-Sulfatoäthyl-sulfonyl)-2-naphtyl | 7-Amino-1-naphthol-3-sulfonsäure | Wasserstoff | 3-Sulfo-phenyl | rot |
| 9 | 6-(β-Sulfatoäthyl-sulfonyl)-1-sulfo-2-naphtyl | 7-Amino-1-naphthol-3-sulfonsäure | Wasserstoff | 3-Sulfo-phenyl | rot |
| 10 | 2,4-Dimethoxy-5-(β-sulfatoäthyl-sulfonyl)-phenyl | 7-Amino-1-naphthol-3-sulfonsäure | Wasserstoff | 3-Sulfo-phenyl | rot |
| 11 | 4-Methyl-3-(β-sulfatoäthylsulfonyl)-phenyl | 7-Amino-1-naphthol-3- sulfonsäure | Wasserstoff | 3-Sulfo-phenyl | rot |
| 12 | 3-Vinylsulfonyl-phenyl | 7-Amino-1-naphthol-3-sulfonsäure | Methyl | β-Sulfo-äthyl | rot |
| 13 | 4-(β-Sulfatoäthyl-sulfonyl)-phenyl | 6-Amino-1-naphthol-3-sulfonsäure | Wasserstoff | 2-Carboxy-phenyl | gelbstichig rot |
| 14 | 4-(β-Sulfatoäthyl-sulfonyl)-phenyl | 6-Amino-1-naphthol-3-sulfonsäure | Wasserstoff | 2-Chlor-phenyl | gelbstichig rot |
| 15 | 4-(β-Sulfatoäthyl-sulfonyl)-phenyl | 6-Amino-1-naphthol-3-sulfonsäure | Wasserstoff | 2,5-Dichlor-phenyl | gelbstichig rot |
| 16 | 4-(β-Sulfatoäthyl-sulfonyl)-phenyl | 6-Amino-1-naphthol-3-sulfonsäure | β-Hydroxyäthyl | β-Hydroxyäthyl | gelbstichig rot |
| 17 | 3-(β-Sulfatoäthyl-sulfonyl)-phenyl | 6-Amino-1-naphthol-3-sulfonsäure | β-Hydroxyäthyl | β-Hydroxyäthyl | gelbstichig rot |
| 18 | 3-(β-Sulfatoäthyl-sulfonyl)-phenyl | 6-Amino-1-naphthol-3-sulfonsäure | Wasserstoff | 4,8-Disulfo-2-naphthyl | gelbstichig rot |
| 19 | 3-(β-Sulfatoäthyl-sulfonyl)-phenyl | 6-Amino-1-naphthol-3-sulfonsäure | Wasserstoff | Wasserstoff | gelbstichig rot |
| 20 | 2-Methyl-5-(β-sulfatoäthylsulfonyl)-phenyl | 6-Amino-1-naphthol-3-sulfonsäure | Wasserstoff | 4-Carboxy-phenyl | gelbstichig rot |
| 21 | 6-(β-Sulfatoäthyl-sulfonyl)-2-naphthyl | 6-Amino-1-naphthol-3,7-disulfonsäure | Wasserstoff | 2-Methoxy-5-sulfophenyl | rot |
| 22 | 6-(β-Sulfatoäthyl-sulfonyl)-2-naphthyl | 6-Amino-1-naphthol-3,7-disulfonsäure | Wasserstoff | 3-Sulfo-phenyl | rot |

| Bsp. | Formelrest d | 3-Sulfo-...-amino-1-naphthol-Rest | Formelrest $R^3$ | Formelrest $R^4$ | Nuance auf Baumwolle |
|---|---|---|---|---|---|
| 23 | 6-(β-Sulfatoäthyl-sulfonyl)-2-naphthyl | 6-Amino-1-naphthol-3,7-disulfonsäure | Wasserstoff | 4-Sulfo-phenyl | rot |
| 24 | 3-Vinylsulfonyl-anilin | 6-Amino-1-naphthol-3,7-disulfonsäure | Wasserstoff | 4-Sulfo-phenyl | rot |
| 25 | 2-Methoxy-5-methyl-4-(β-sulfatoäthyl-sulfonyl)-phenyl | 6-Amino-1-naphthol-3,7-sulfonsäure | Wasserstoff | 4-Sulfo-phenyl | rot |
| 26 | 3-(β-Sulfatoäthyl-sulfonyl)-phenyl | 7-Amino-1-naphthol-3,6-disulfonsäure | Wasserstoff | 4-Sulfo-phenyl | rot |
| 27 | 3-(β-Sulfatoäthyl-sulfonyl)-phenyl | 7-Amino-1-naphthol-3,6-disulfonsäure | Wasserstoff | 1-Sulfo-2-naphthyl | rot |
| 28 | 8-(β-Sulfatoäthyl-sulfonyl)-2-naphthyl | 7-Amino-1-naphthol-3,6-disulfonsäure | Wasserstoff | 3-Sulfo-phenyl | rot |
| 29 | 4-(β-Thiosulfato-äthylsulfonyl)-phenyl | 7-Amino-1-naphthol-3,6-disulfonsäure | Wasserstoff | 4-Carboxy-phenyl | rot |
| 30 | 3-Sulfo-4-(β-sulfatoäthyl-sulfonyl)-phenyl | 7-Amino-1-naphthol-3,6-disulfonsäure | Wasserstoff | 2-Carboxy-5-sulfo-phenyl | rot |
| 31 | 2-Methoxy-5-(β-sulfatoäthyl-sulfonyl)-phenyl | 7-Amino-1-naphthol-3-sulfonsäure | Wasserstoff | 2-Methoxy-4-sulfophenyl | rot |
| 32 | 2-Methoxy-5-(β-sulfatoäthyl-sulfonyl)-phenyl | 7-Amino-1-naphthol-3-sulfonsäure | Wasserstoff | 4-Carboxy-phenyl | rot |
| 33 | 4-(β-Sulfatoäthyl-sulfonyl)-phenyl | 7-Amino-1-naphthol-3-sulfonsäure | Wasserstoff | 3-Sulfo-phenyl | rot |
| 34 | 4-(β-Sulfatoäthyl-sulfonyl)-phenyl | 6-Amino-1-naphthol-3-sulfonsäure | Wasserstoff | 3-Sulfo-phenyl | gelbstichig rot |
| 35 | 2-Methoxy-5-(β-Sulfatoäthyl-sulfonyl)-phenyl | 6-Amino-1-naphthol-3-sulfonsäure | Wasserstoff | 3-Sulfo-phenyl | gelbstichig rot |
| 36 | 2-Sulfo-4-(β-sulfato-äthylsulfonyl)-phenyl | 6-Amino-1-naphthol-3-sulfonsäure | Wasserstoff | 3-Sulfo-phenyl | gelbstichig rot |
| 37 | 4-Methoxy-3-(β-sulfatoäthyl-sulfonyl)-phenyl | 6-Amino-1-naphthol-3-sulfonsäure | Wasserstoff | 3-Sulfo-phenyl | gelbstichig rot |
| 38 | 3-(β-Sulfatoäthyl-sulfonyl)-phenyl | 6-Amino-1-naphthol-3-sulfonsäure | Wasserstoff | 3-Sulfo-phenyl | gelbstichig rot |
| 39 | 2-Methoxy-4-(β-sul-fatoäthylsulfonyl)-5-methyl-phenyl | 6-Amino-1-naphthol-3-sulfonsäure | Wasserstoff | 3-Sulfo-phenyl | gelbstichig rot |
| 40 | 4-(β-Sulfatoäthyl-sulfonyl)-phenyl | 6-Amino-1-naphthol-3-sulfonsäure | Wasserstoff | 2,5-Disulfo-phenyl | gelbstichig rot |
| 41 | 4-(β-Sulfatoäthyl-sulfonyl)-phenyl | 6-Amino-1-naphthol-3-sulfonsäure | Wasserstoff | 4-Sulfo-phenyl | gelbstichig rot |
| 42 | 2,5-Dimethoxy-4-(β-sulfatoäthyl-sulfonyl)-phenyl | 6-Amino-1-naphthol-3-sulfonsäure | Wasserstoff | 4-Sulfo-phenyl | gelbstichig rot |
| 43 | 4-(β-Sulfatoäthyl-sulfonyl)-phenyl | 6-Amino-1-naphthol-3-sulfonsäure | Methyl | β-Sulfo-äthyl | gelbstichig rot |
| 44 | 8-(β-Sulfatoäthyl-sulfonyl)-6-sulfo-2-naphthyl | 6-Amino-1-naphthol-3-sulfonsäure | Methyl | β-Sulfo-äthyl | gelbstichig rot |
| 45 | 8-(β-Sulfatoäthyl-sulfonyl)-6-sulfo-2-naphthyl | 6-Amino-1-naphthol-3-sulfonsäure | Wasserstoff | 2-Chlor-phenyl | gelbstichig rot |
| 46 | 8-(β-Sulfatoäthyl-sulfonyl)-6-sulfo-2-naphthyl | 6-Amino-1-naphthol-3-sulfonsäure | Methyl | Phenyl | gelbstichig rot |
| 47 | 8-(β-Sulfatoäthyl-sulfonyl)-2-naphthyl | 6-Amino-1-naphthol-3-sulfonsäure | Methyl | Phenyl | gelbstichig rot |

| Bsp. | Formelrest d | 3-Sulfo-...-amino-1-naphthol-Rest | Formelrest $R^3$ | Formelrest $R^4$ | Nuance auf Baumwolle |
|---|---|---|---|---|---|
| 48 | 6-(β-Sulfatoäthyl-sulfonyl)-1-sulfo-2-naphthyl | 6-Amino-1-naphthol-3-sulfonsäure | Methyl | Phenyl | gelbstichig rot |
| 49 | 6-(β-Sulfatoäthyl-sulfonyl)-1-sulfo-2-naphthyl | 7-Amino-1-naphthol-3-sulfonsäure | Methyl | Phenyl | rot |
| 50 | 4-(β-Sulfatoäthyl-sulfonyl)-phenyl | 7-Amino-1-naphthol-3-sulfonsäure | Methyl | Phenyl | rot |
| 51 | 6-(β-Sulfatoäthyl-sulfonyl)-1-sulfo-2-naphthyl | 6-Amino-1-naphthol-3-sulfonsäure | Wasserstoff | 2-Sulfo-phenyl | gelbstichig rot |
| 52 | 6-(β-Sulfatoäthyl-sulfonyl)-1-sulfo-2-naphthyl | 6-Amino-1-naphthol-3-sulfonsäure | Wasserstoff | 2,5-Disulfo-phenyl | gelbstichig rot |
| 53 | 8-(β-Sulfatoäthyl-sulfonyl)-6-sulfo-2-naphthyl | 6-Amino-1-naphthol-3-sulfonsäure | Wasserstoff | 2-Sulfo-phenyl | gelbstichig rot |

## Patentansprüche

1. Wasserlösliche Monoazoverbindungen der allgemeinen Formel (1)

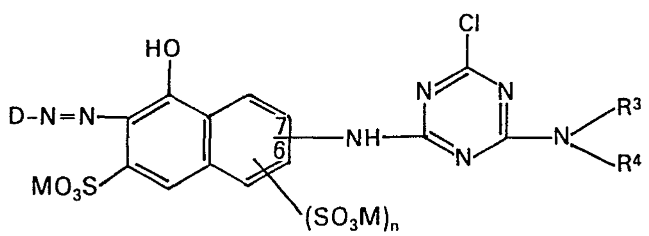

(1)

in welcher bedeuten:

D ist ein Phenyl- oder Naphthylrest der allgemeinen Formel (2a), (2b) oder (2c)

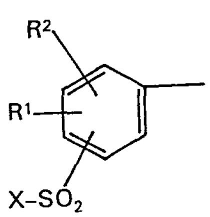

(2a)

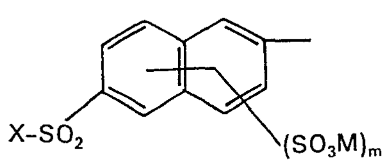

(2b)

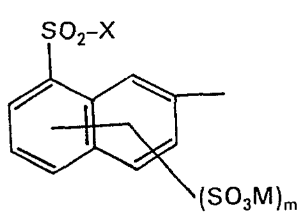

(2c)

in welchen

$R^1$ ein Wasserstoffatom, eine Alkylgruppe von 1 bis 4 C-Atomen, eine Alkoxygruppe von 1 bis 4 C-Atomen, eine Carboxygruppe oder eine Sulfogruppe ist und

$R^2$ ein Wasserstoffatom, eine Alkylgruppe von 1 bis 4 C-Atomen, eine Alkoxygruppe von 1 bis 4 C-Atomen, eine Carboxygruppe oder eine Sulfogruppe bedeutet,

m für die Zahl Null, 1 oder 2 steht und

X die Vinylgruppe oder eine β-Thiosulfatoäthyl-, β-Chloräthyl- oder β-Sulfatoäthyl-Gruppe ist;

n steht für die Zahl Null oder 1;

die Aminogruppe, über die der Chlortriazinylrest an den Sulfonaphtholrest gebunden ist, befindet sich in 6- oder 7-Stellung dieses Naphtholrestes;

die freistehende Sulfogruppe $-SO_3M$ mit M der nachstehend angegebenen Bedeutung im Naphtholrest steht in 5-, 6- oder 7-Stellung des Naphtholrestes gebunden;

$R^3$ ist ein Wasserstoffatom oder eine Alkylgruppe von 1 bis 4 C-Atomen, die durch eine Hydroxygruppe oder durch eine oder zwei wasserlöslich machende Gruppen substituiert sein kann;

$R^4$ ist ein Wasserstoffatom oder eine Alkylgruppe von 1 bis 6 C-Atomen, die durch eine Hydroxygruppe oder durch eine oder zwei wasserlöslich machende Gruppen substituiert sein kann, oder ist der Phenyl- oder ein Naphthylrest, wobei diese Phenyl- und Naphthylreste noch durch einen, zwei oder drei Substituenten aus der Gruppe Sulfo, Carboxy, Halogen, Alkyl von 1 bis 4 C-Atomen, Alkoxy von 1 bis 4 C-Atomen, Hydroxy und Carbalkoxy von 2 bis 5 C-Atomen substituiert sein können, oder ist ein Cycloalkylrest;

M ist ein Wasserstoffatom oder ein Alkalimetall oder das Äquivalent eines Metalls der 2. oder 3. Hauptgruppe des Periodischen Systems.

2. Azoverbindungen nach Anspruch 1, dadurch gekennzeichnet, dass D ein Phenylrest der in Anspruch 1 angegebenen Formel (2a) ist, in welcher $R^1$ ein Wasserstoffatom, die Methyl- oder Äthylgruppe, die Methoxy- oder Äthoxygruppe oder eine Sulfogruppe ist, $R^2$ ein Wasserstoffatom oder eine Methoxy- oder Äthoxygruppe bedeutet, wobei $R^1$ und $R^2$ zueinander gleiche oder voneinander verschiedene Bedeutungen haben können, und die Gruppe $-SO_2-X$ mit X der obengenannten Bedeutung in meta- oder in para-Stellung zur Bindung der Azogruppe an den Benzolkern gebunden ist.

3. Azoverbindungen nach Anspruch 1, dadurch gekennzeichnet, dass D ein Naphthylrest der in Anspruch 1 genannten Formel (2b) ist, in welcher X die in Anspruch 1 genannte Bedeutung besitzt und m für die Zahl Null steht.

4. Azoverbindungen nach Anspruch 1, dadurch gekennzeichnet, dass D ein Naphthylrest der in Anspruch 1 genannten Formel (2b) ist, in welcher m für die Zahl 1 steht und diese Sulfogruppe in 8-Stellung an diesen 2-Naphthylrest gebunden ist und in welcher M und X die in Anspruch 1 genannten Bedeutungen haben.

5. Azoverbindungen nach Anspruch 1, dadurch gekennzeichnet, dass D ein Naphthylrest der in Anspruch 1 genannten Formel (2b) ist, in welcher m für die Zahl 1 steht und diese Sulfogruppe in 1-Stellung an diesen 2-Naphthylrest gebunden ist und in welcher M und X die in Anspruch 1 genannten Bedeutungen haben.

6. Azoverbindungen nach Anspruch 1, dadurch gekennzeichnet, dass D ein Naphthylrest der in Anspruch 1 genannten Formel (2c) ist, in welcher X die in Anspruch 1 genannte Bedeutung besitzt und m für die Zahl Null steht.

7. Azoverbindungen nach Anspruch 1, dadurch gekennzeichnet, dass D ein Naphthylrest der in Anspruch 1 genannten Formel (2c) ist, in welcher m für die Zahl 1 steht und diese Sulfogruppe in 6-Stellung an diesen 2-Naphthylrest gebunden ist und M und X die in Anspruch 1 genannten Bedeutungen haben.

8. Azoverbindungen nach einem der Ansprüche 1 bis 7, dadurch gekennzeichnet, dass die Aminogruppe, über die der Chlortriazinylrest an den Sulfonaphtholrest gebunden ist, sich in 7-Stellung dieses Naphtholrestes befindet und dass n für die Zahl Null steht.

9. Azoverbindungen nach einem der Ansprüche 1 bis 7, dadurch gekennzeichnet, dass die Aminogruppe, über die der Chlortriazinylrest an den Sulfonaphtholrest gebunden ist, sich in 6-Stellung dieses Naphtholrestes befindet und dass n für die Zahl Null steht.

10. Azoverbindungen nach einem der Ansprüche 1 bis 7, dadurch gekennzeichnet, dass die Aminogruppe, über die der Chlortriazinylrest an den Sulfonaphtholrest gebunden ist, sich in 7-Stellung dieses Naphtholrestes befindet und dass n für die Zahl 1 steht und diese Sulfogruppe mit M der in Anspruch 1 genannten Bedeutung in 6-Stellung an diesen Naphtholrest gebunden ist.

11. Azoverbindungen nach einem der Ansprüche 1 bis 10, dadurch gekennzeichnet, dass X die Vinylgruppe oder eine β-Sulfatoäthyl-Gruppe ist.

12. Azoverbindungen nach einem der Ansprüche 1 bis 11, dadurch gekennzeichnet, dass M ein Wasserstoffatom oder ein Alkalimetallatom oder das Äquivalent des Calciums ist.

13. Verfahren zur Herstellung der in Anspruch 1 genannten und definierten Azoverbindungen der allgemeinen Formel (1), dadurch gekennzeichnet, dass man die Diazoniumverbindung eines Anilins oder 2-Naphthylamins der allgemeinen Formel (3)

$$D-NH_2 \quad (3)$$

in welcher D die in Anspruch 1 genannten Bedeutungen besitzt, mit einer Kupplungskomponente der allgemeinen Formel (4)

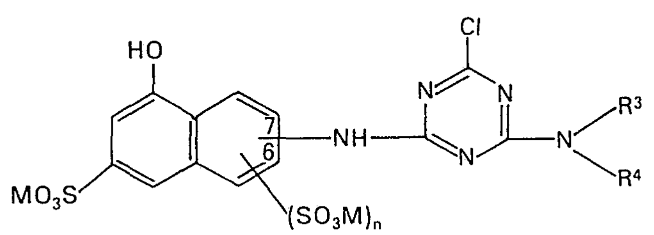

(4)

in welcher M, n, $R^3$ und $R^4$ die in Anspruch 1 genannten Bedeutungen haben und in welcher die freistehende Sulfogruppe in 5-, 6- oder 7-Stellung sowie die Aminogruppe, die mit dem Chlortriazinylrest verbunden ist, in 6- oder 7-Stellung an den Naphthalinkern gebunden sind, kuppelt, oder dass man eine Azoverbindung der allgemeinen Formel (5)

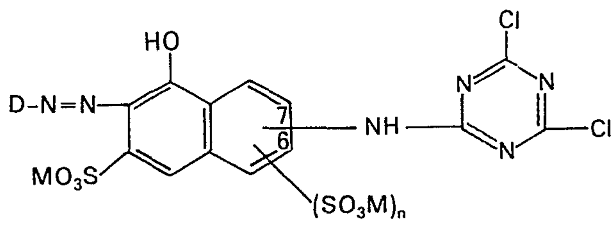

(5)

in welcher D, M und n die in Anspruch 1 genannten Bedeutungen haben und in welcher die freistehende Sulfogruppe in 5-, 6- oder 7-Stellung sowie die Aminogruppe, die mit dem Dichlortriazinylrest verbunden ist, in 6- oder 7-Stellung an den Naphthalinkern gebunden sind, mit einem Amin der allgemeinen Formel (6)

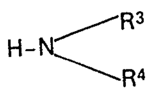

(6)

in welcher $R^3$ und $R^4$ die in Anspruch 1 genannten Bedeutungen haben, umsetzt.

14. Verwendung der in Anspruch 1 genannten und definierten Azoverbindungen der allgemeinen Formel (1) zum Färben (einschliesslich Bedrucken) von hydroxy- und/oder carbonamidgruppenhaltigen Materialien, insbesondere Fasermaterialien.

## Claims

1. Water-soluble monoazo compounds of the general formula (1)

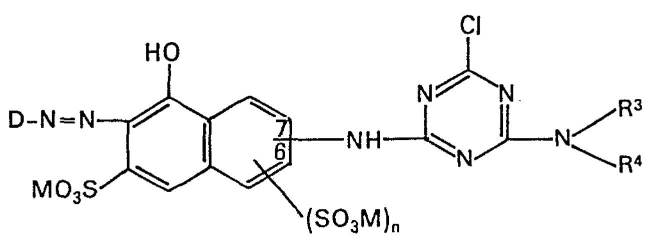

(1)

in which D is a phenyl or naphthyl radical of the general formula (2a), (2b) or (2c)

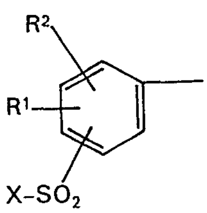

(2a)

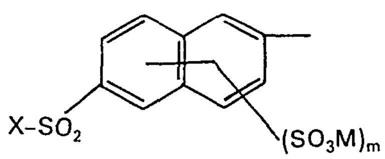

(2b)

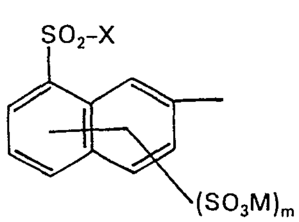

(2c)

in which

$R^1$ is a hydrogen atom, an alkyl group of 1 to 4 C-atoms, an alkoxy group of 1 to 4 C-atoms, a carboxy group or sulfo group, and

$R^2$ denotes a hydrogen atom, an alkyl group of 1 to 4 C-atoms, an alkoxy group of 1 to 4 C-atoms, a carboxy group or a sulfo group,

m represents the number zero, 1 or 2, and

X is the vinyl group or a β-thiosulfatoethyl, β-chloroethyl or β-sulfatoethyl group;

n represents the number zero or 1;

the amino group via which the chlorotriazinyl radical is bonded to the sulfonaphthol radical is in the 6- or 7-position of this naphthol radical;

the free sulfo group $-SO_3M$ in the naphthol radical with M of the meaning given below is bonded to the 5-, 6- or 7-position of the naphthol radical;

$R^3$ is a hydrogen atom or an alkyl group of 1 to 4 C-atoms which can be substituted by a hydroxy group or by one or two water-solubilizing groups;

$R^4$ is a hydrogen atom or an alkyl group of 1 to 6 C-atoms which can be substituted by a hydroxy group or by one or two water-solubilizing groups, or is the phenyl or a naphthyl radical where these phenyl and naphthyl radicals can be substituted by one, two or three substituents from the group consisting of sulfo, carboxy, halogen, alkyl of 1 to 4 C-atoms, alkoxy of 1 to 4 C-atoms, hydroxy and carbalkoxy of 2 to 5 C-atoms, or is a cycloalkyl radical;

M is a hydrogen atom or an alkali metal or the equivalent of a metal of Main Group II or III of the Periodic Table.

2. Azo compounds according to claim 1, characterized by that D is a phenyl radical of the formula (2a) which is given in claim 1 and in which $R^1$ is a hydrogen atom, the methyl or ethyl group, the methoxy of ethoxy group or a sulfo group, $R^2$ is a hydrogen atom or a methoxy or ethoxy group,

and $R^1$ and $R^2$ can be identical to or different from each other, and the group $-SO_2-X$ with X of the above mentioned meaning can be bonded to the benzene nucleus in the meta- or para-position relative to the bond of the azo group.

3. Azo compounds according to claim 1, characterized by that D is a naphthyl radical of the formula (2b) which is given in claim 1 and in which X has the meaning mentioned in claim 1 and m represents the number zero.

4. Azo compounds according to claim 1, characterized by that D is a naphthyl radical of the formula (2b) which is given in claim 1 and in which m represents the number 1 and this sulfo group is bonded to the 2-naphthyl radical in the 8-position and in which M and X have the meanings mentioned in claim 1.

5. Azo compounds according to claim 1, characterized by that D is a naphthyl radical of the formula (2b) which is given in claim 1 and in which m represents the number 1 and this sulfo group is bonded to this 2-naphthyl radical in the 1-position and in which M and X have the meanings mentioned in claim 1.

6. Azo compounds according to claim 1, characterized by that D is a naphthyl radical of the formula (2c) which is given in claim 1 and in which X has the meaning mentioned in claim 1 and m represents the number zero.

7. Azo compounds according to claim 1, characterized by that D is a naphthyl radical of the formula (2c) which is given in claim 1 and in which m represents the number 1 and this sulfo group is bonded to this 2-naphthyl radical in the 6-position and M and X have the meanings mentioned in claim 1.

8. Azo compounds according to any one of claims 1 to 7, characterized by that the amino group via which the chlorotriazinyl radical is bonded to the sulfonaphthol radical is in the 7-position of this naphthol radical and n represents the number zero.

9. Azo compounds according to any one of claims 1 to 7, characterized by that the amino group via which the chlorotriazinyl radical is bonded to the sulfonaphthol radical is in the 6-position of this naphthol radical and n represents the number zero.

10. Azo compounds according to any one of claims 1 to 7, characterized by that the amino group via which the chlorotriazinyl radical is bonded to the sulfonaphthol radical is in the 7-position of this naphthol radical and n represents the number 1 and this sulfo group with M of the meaning mentioned in claim 1 is bonded to this naphthol radical in the 6-position.

11. Azo compounds according to any one of claims 1 to 10, characterized by that X is the vinyl group or a β-sulfatoethyl group.

12. Azo compounds according to any one of claims 1 to 11, characterized by that M is a hydrogen atom or an alkali metal atom or the equivalent of calcium.

13. Process for the preparation of the azo compounds of the general formula (1) mentioned and defined in claim 1, characterized by that the diazonium compound of an aniline or 2-naphthylamine of the general formula (3)

$$D-NH_2 \qquad (3)$$

in which D has the meanings mentioned in claim 1, is coupled with a coupling component of the general formula (4)

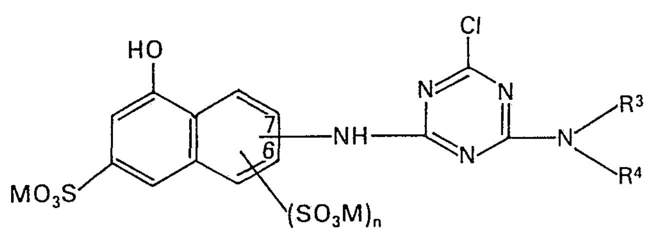

(4)

in which M, n, $R^3$ and $R^4$ have the meanings mentioned in claim 1 and in which the free sulfo group is bonded to the naphthalene nucleus in the 5-, 6- or 7-position and the amino group which is bonded to the chlorotriazinyl radical is bonded to the naphthalene nucleus in the 6- or 7-position, or that an azo compound of the general formula (5)

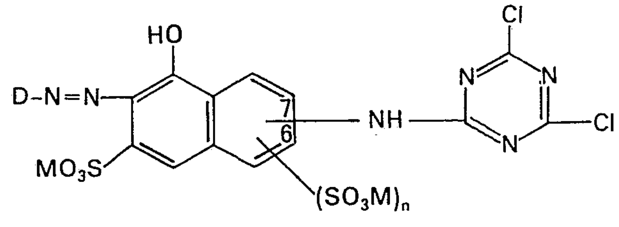

(5)

in which D, M and n have the meanings mentioned in claim 1 and in which the free sulfo group is bonded to the naphthalene nucleus in the 5-, 6- or 7-position and the amino group which is bonded to the dichlorotriazinyl radical is bonded to the naphthalene nucleus in the 6- or 7-position, is reacted with an amine of the general formula (6)

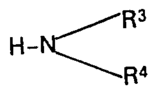

(6)

in which $R^3$ and $R^4$ have the meanings mentioned in claim 1.

14. Use of the azo compounds of the general formula (1) mentioned and defined in claim 1, for coloring (including printing) hydroxy- and/or carboxamide groups containing materials, in particular fiber materials.

## Revendications

1. Composés mono-azoïques solubles dans l'eau qui répondent à la formule générale 1:

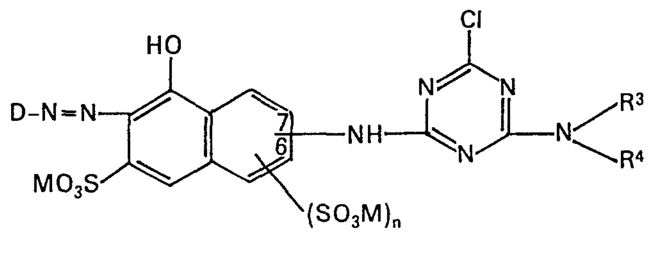

(1)

dans laquelle

D représente un radical phényle ou naphtyle répondant à l'une des formules générales 2a, 2b et 2c:

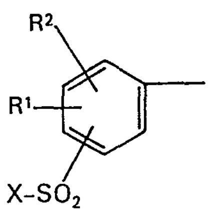

(2a)

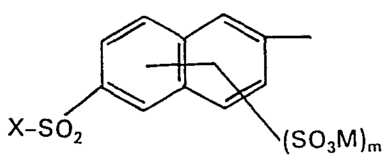

(2b)

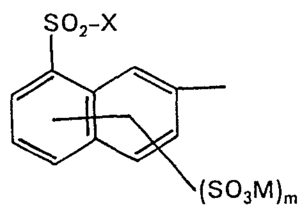

(2c)

dans lesquelles

$R^1$ représente un atome d'hydrogène, un radical alkyle en $C_1$–$C_4$, un radical alcoxy en $C_1$–$C_4$, un radical carboxy ou un radical sulfo,

$R^2$ représente un atome d'hydrogène, un radical alkyle en $C_1$–$C_4$, un radical alcoxy en $C_1$–$C_4$, un radical carboxy ou un radical sulfo,

m représente un nombre égal à 0, à 1 ou à 2 et

X représente un radical vinyle, thiosulfato-2 éthyle, chloro-2 éthyle ou sulfato-2 éthyle,

n représente un nombre égal à 0 ou à 1,

le radical amino qui assure la liaison entre le radical chlorotriazinyle et le radical du sulfo-naphtol se trouve, sur ce radical de sulfo-naphtol, en position 6 ou en position 7,

le radical sulfo nonlocalisé $-SO_3M$ (dans lequel M a la signification indiquée ci-dessous) occupe, sur le radical du naphtol, l'une des positions 5, 6 et 7,

$R^3$ représente un atome d'hydrogène ou un radical alkyle en $C_1$–$C_4$, qui peut porter un radical hydroxy ou un ou deux radicaux hydrosolubilisants,

$R^4$ représente: un atome d'hydrogène, un radical alkyle en $C_1$–$C_6$ qui peut porter un radical hydroxy ou un ou deux radicaux hydrosolubilisants, un radical phényle ou un radical naphtyle, chacun des radicaux phényle et naphtyle pouvant en outre porter un, deux ou trois substituants, pris dans l'ensemble constitué par les radicaux sulfo, carboxy, halogéno, alkyles en $C_1$–$C_4$, alcoxy en $C_1$–$C_4$, hydroxy et alcoxycarbonyles en $C_2$–$C_5$, ou un radical cycloalkyle, et

M représente un atome d'hydrogène, un métal alcalin ou l'équivalent d'un métal du deuxième ou du troisième groupe principal de la classification périodique.

2. Composés azoïques selon la revendication 1 caractérisés en ce que D représente un radical phényle qui répond à la formule 2a représentée à la revendication 1 et dans lequel $R^1$ représente un atome d'hydrogène ou un radical méthyle, éthyle, méthoxy, éthoxy ou sulfo, $R^2$ un atome d'hydrogène ou un radical méthoxy ou éthoxy, $R^1$ et $R^2$ pouvant avoir, l'un par rapport à l'autre, des significations identiques ou différentes, et le radical $-SO_2$-X, dans lequel X a la signification précédemment donnée, se trouve, sur le noyau benzénique, en position méta ou para relativement au radical azo.

3. Composés azoïques selon la revendication 1 caractérisés en ce que D représente un radical naphtyle qui répond à la formule 2b (voir la revendication 1) et dans lequel X a la signification données à la revendication 1 et m représente le nombre 0.

4. Composés azoïques selon la revendication 1 caractérisés en ce que D représente un radical naphtyle qui répond à la formule 2b (voir revendication 1) et dans lequel m représente le nombre 1, le radical sulfo correspondant à cet indice m se trouve en position 8 sur le radical naphtyle-2, et

M et X ont les significations données à la revendication 1.

5. Composés azoïques selon la revendication 1 caractérisés en ce que D représente un radical naphtyle qui répond à la formule 2b (voir revendication 1) et dans lequel m représente le nombre 1, le radical sulfo correspondant à cet indice m se trouve en position 1 sur le radical naphtyle-2, et M et X ont les significations données à la revendication 1.

6. Composés azoïques selon la revendication 1 caractérisés en ce que D représente un radical naphtyle de formule 2c (voir la revendication 1) dans lequel X a la signification donnée à la revendication 1 et m est égal à 0.

7. Composés azoïques selon la revendication 1 caractérisés en ce que D représente un radical naphtyle qui répond à la formule 2c (voir la revendication 1) et dans lequel m est égal à 1, le radical sulfo correspondant se trouve en position 6 sur le radical naphtyle-2, et M et X ont les significations données à la revendication 1.

8. Composés azoïques selon l'une quelconque des revendications 1 à 7, caractérisés en ce que le radical amino par lequel le radical chlorotriazinyle est relié au radical du sulfo-naphtol se trouve en position 7 sur ce radical de naphtol, et en ce que n est égal à 0.

9. Composés azoïques selon l'une quelconque des revendications 1 à 7, caractérisés en ce que le radical amino par lequel le radical chlorotriazinyle est relié au radical du sulfo-naphtol se trouve en position 6 sur ce radical de naphtol et en ce que n est égal à 0.

10. Composés azoïques selon l'une quelconque des revendications 1 à 7, caractérisés en ce que le radical amino par lequel le radical chlorotriazinyle est relié au radical du sulfo-naphtol se trouve en position 7 sur ce radical de naphtol, n est égal à 1 et le radical sulfo correspondant, dans lequel M a la signification donnée à la revendication 1, occupe la position 6 de ce radical de naphtol.

11. Composés azoïques selon l'une quelconque des revendications 1 à 10, caractérisés en ce que X représente un radical vinyle ou un radical sulfato-2 éthyle.

12. Composés azoïques selon l'une quelconque des revendicatios 1 à 11, caractérisés en ce M représente un atome d'hydrogène, un atome de métal alcalin ou l'équivalent du calcium.

13. Procédé de préparation des composés azoïques répondant à la formule générale 1 qui a été représentée et définie à la revendication 1, procédé caractérisé en ce que: on copule le diazoïque d'une aniline ou d'une naphtyl-2 amine répondant à la formule générale 3:

$D-NH_2$ (III)

dans laquelle D a la signification donnée à la revendication 1, avec un copulant répondant à la formule générale 4:

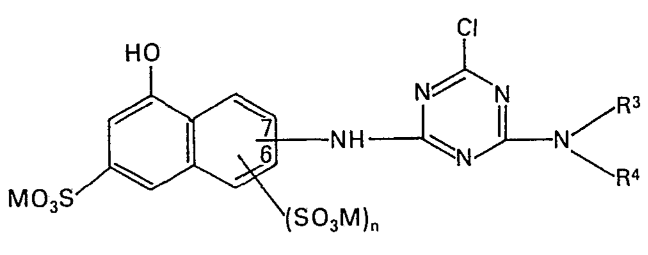

(4)

dans laquelle M, n, R³ et R⁴ ont les significations données à la revendication 1 et dans laquelle le radical sulfo qui n'est pas positionné avec précision se trouve, sur le noyau naphtalénique, à l'une des positions 5, 6 et 7, et le radical amino lié au radical chlorotriazinyle se trouve en position 6 ou en position 7 sur le noyau naphtalénique, ou on fait réagir un composé azoïque répondant à la formule générale 5:

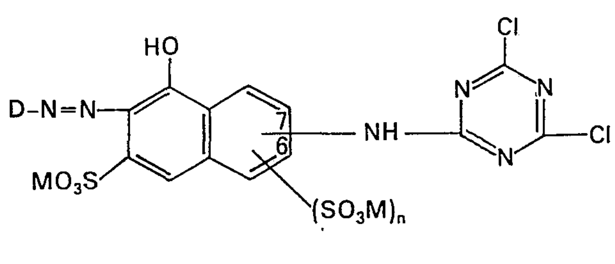

(5)

dans laquelle D, M et n ont les significations données à la revendication 1 et dans laquelle le radical sulfo qui n'est pas positionné avec précision se trouve, sur le noyau naphtalénique, à l'une des positions 5, 6 et 7, et le radical amino relié au radical dichlorotriazinyle se trouve en position 6 ou en position 7 sur le noyau naphtalénique, avec une amine répondant à la formule générale 6:

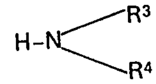

(6)

dans laquelle R³ et R⁴ ont les significations données à la revendication 1.

14. Application des composés azoïques répondant à la formule générale 1 qui a été représentée et définie à la revendication 1, à la teinture (y compris l'impression) de matières, plus particulièrement fibreuses, qui contiennent des radicaux hydroxy et/ou des radicaux carbamoyles.